# DEMANDE DE BREVET EUROPEEN

(11) **EP 2 157 679 A1**
(43) Date de publication de la demande: **24.02.2010**
(21) Numéro de dépôt: 09164939.2
(22) Date de dépôt: 08.07.2009
(51) Int. Cl.: H02K 1/24, H02K 1/27, H02K 1/22

(54) **Rotor de machine électrique tournante synchrone, notamment d'alternateur de véhicule automobile**

(30) Priorité: 19.08.2008 FR 0855625
(71) Demandeur: VALEO EQUIPEMENTS ELECTRIQUES MOTEUR, 94056 Créteil Cedex (FR)
(72) Inventeur: Mipo, Jean-Claude, 94000 Creteil (FR); Tamto, Yolande, 94230 Cachan (FR); Li, Li, 78220 Viroflay (FR); Soubielle, Baldwin, 94160 Saint Mande (FR); Foggia, Albert, 38000 Grenoble (FR)
(74) Mandataire: de Lambilly Delorme, Marie Pierre

(57) **Abrégé**

L'invention concerne un rotor (12) de machine électrique tournante synchrone, notamment d'alternateur ou d'alterno-démarreur de véhicule automobile, la machine étant notamment du type polyphasé, le rotor comportant :
- deux roues polaires (20 ; 22),
- au moins un dispositif de compensation (75) de l'effet de la réaction magnétique d'induit lors du fonctionnement de la machine électrique tournante, ce dispositif étant porté au moins partiellement par l'une au moins des roues polaires.

## Description

L'invention concerne notamment un rotor de machine électrique tournante synchrone, notamment d'alternateur ou d'alterno-démarreur de véhicule automobile.

Le brevet FR 2 793 085 décrit un alternateur pour véhicule automobile, comprenant un stator, encore appelé induit, et un rotor à plusieurs pôles, encore appelé inducteur, monté sur un arbre. Le rotor comporte deux roues polaires pourvues chacune d'une pluralité de griffes et définissant un espace pour recevoir un bobinage d'excitation. Les roues forment entre elles, au niveau des griffes, des espaces interpolaires pour des aimants permanents par exemple en terre rare.

Notamment dans ce type de machine, lors de son fonctionnement, le stator, ou induit, est la source d'un flux de réaction magnétique qui est démagnétisant en entrée d'un pôle du rotor et magnétisant en sortie de ce pôle.

En l'absence de saturation dans la machine, le flux magnétique par pôle ne change pas puisque les effets de la réaction magnétique d'induit respectivement en entrée et en sortie de pôle se compense.

En présence de saturation, l'effet magnétisant ne se manifeste plus et seul l'effet démagnétisant demeure, ce qui conduit à une réduction du flux magnétique en charge.

Par ailleurs, des courants de Foucault peuvent apparaître dans le rotor lors du fonctionnement de la machine, ce qui peut nuire à la performance de cette machine.

L'invention vise notamment à pallier les problèmes précités.

L'invention a ainsi pour objet un rotor, encore appelé inducteur, de machine électrique tournante synchrone, notamment d'alternateur ou d'alterno-démarreur de véhicule automobile, la machine étant notamment du type polyphasé, le rotor comportant :
- au moins deux roues polaires, notamment à griffes,
- au moins un dispositif de compensation de l'effet de la réaction magnétique d'induit lors du fonctionnement de la machine électrique tournante, ce dispositif de compensation étant porté au moins partiellement par l'une au moins des roues polaires.

Grâce à l'invention, il est possible de compenser l'effet de la réaction magnétique d'induit, sans avoir à changer l'agencement du stator de la machine, ce qui permet de répondre, le cas échéant, à des contraintes d'encombrement des stator et rotor, imposées par un constructeur automobile.

De plus l'invention permet d'augmenter la performance de la machine.

Dans un exemple de mise en oeuvre de l'invention, le dispositif de compensation comporte un bobinage formé notamment par des fils.

Ce bobinage est agencé pour créer, lorsqu'il est parcouru par un courant électrique, un champ magnétique compensant la réaction magnétique de l'induit.

En variante, le dispositif de compensation comporte au moins un aimant permanent apte à générer un champ magnétique compensant la réaction magnétique de l'induit.

La compensation de la réaction d'induit peut également être réalisée uniquement par une ou plusieurs rainures qui allongent les chemins de flux de l'induit.

L'une au moins des roues polaires comprend avantageusement une griffe, et le rotor comporte de préférence au moins une rainure formée sur ladite griffe de la roue polaire.

Avantageusement le dispositif de compensation s'étend au moins partiellement dans cette rainure.

Par exemple un aimant permanent peut être introduit dans cette rainure, et l'aimant peut avoir une hauteur égale à la profondeur de la rainure ou, en variante, une hauteur inférieure à la profondeur de la rainure.

L'invention a également pour objet une machine électrique tournante synchrone, notamment un alternateur ou un alterno-démarreur de véhicule automobile, notamment du type polyphasé ou monophasé, comportant un rotor tel que défini ci-dessus.

Ce rotor peut, si on le souhaite, comporter entre les roues polaires des espaces interpolaires recevant des aimants permanents.

L'invention a encore pour objet un rotor de machine électrique tournante à courant alternatif, synchrone, notamment d'alternateur ou d'alterno-démarreur de véhicule automobile, la machine étant notamment du type polyphasé, présentant un axe longitudinal et comportant :
- au moins deux roues polaires dont l'une au moins comporte une ou plusieurs griffes,
- sur l'une au moins de ces griffes, au moins un obstacle, ou barrière de flux, agencé pour provoquer l'allongement d'un chemin parcouru par des courants de Foucault apparaissant dans la griffe de la roue polaire lors du fonctionnement de la machine électrique tournante, l'obstacle s'étendant sur une profondeur de la griffe, mesurée suivant une direction radiale perpendiculaire à l'axe longitudinal, supérieure au moins à un quart ou à la moitié de l'épaisseur de la griffe prise à une extrémité libre de celle-ci.

L'invention permet ainsi de réduire efficacement les pertes dues aux courants de Foucault sur le rotor, ainsi que le bruit généré par la machine.

Cet obstacle a également pour but d'allonger le chemin de flux magnétique de réaction d'induit, augmentent ainsi sa reluctance.

Ceci permet de réduire le flux de réaction d'induit.

Dans un exemple de mise en oeuvre de l'invention, l'obstacle comporte au moins une rainure, notamment une unique rainure, réalisée sur l'une des griffes de la roue polaire. Cet obstacle est notamment différent de stries sur la griffe.

La rainure peut, le cas échéant, être laissée inoccupée.

L'une au moins des griffes peut, si on le souhaite, comporter au moins deux rainures, notamment trois rainures, par exemple sensiblement parallèles.

La rainure peut déboucher notamment sur une face radialement extérieure de la griffe et présenter une profondeur supérieure au moins à la moitié de l'épaisseur de la griffe correspondante, mesurée dans une direction radiale à une extrémité libre de cette griffe.

Dans un exemple de mise en oeuvre de l'invention, la rainure s'étend sur la griffe sensiblement d'une première extrémité longitudinale de la griffe jusqu'à une deuxième extrémité longitudinale de la griffe, opposée à la première extrémité.

En variante, la rainure peut s'étendre seulement sur une portion de l'étendue longitudinale de la griffe correspondante.

Par exemple, la rainure est sensiblement rectiligne lorsque cette griffe est observée suivant une direction radiale perpendiculaire à l'axe longitudinale.

Si on le souhaite, la rainure s'étend sensiblement parallèlement à l'axe longitudinal lorsque la griffe est observée suivant une direction radiale perpendiculaire à l'axe longitudinale.

En variante, la rainure s'étend suivant une direction faisant un angle non nul avec l'axe longitudinal lorsque la griffe est observée suivant une direction radiale perpendiculaire à l'axe longitudinale.

Ceci peut permettre d'améliorer la compensation de l'effet de la réaction d'induit lorsqu'un tel dispositif de compensation est placé dans cette rainure.

La rainure peut ainsi servir à la fois pour faire obstacle aux courants de Foucault et recevoir le dispositif de compensation de l'effet de la réaction magnétique d'induit.

La machine électrique peut ainsi être simplifiée, tout en étant performante.

Le dispositif de compensation peut comporter l'un au moins d'un bobinage et d'un aimant permanent.

Dans un exemple de mise en oeuvre de l'invention, la rainure est traversante dans la direction radiale du rotor au moins sur une portion de sa longueur, notamment sur toute sa longueur.

En variante, la rainure ne traverse pas toute l'épaisseur de la griffe.

L'invention a encore pour objet une machine électrique tournante synchrone, notamment un alternateur de véhicule automobile, notamment du type polyphasé, comportant un rotor tel que décrit ci-dessus.

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, en coupe longitudinale, un alternateur conforme à un exemple de mise en oeuvre de l'invention,
- les figures 2 et 3 illustrent schématiquement et partiellement des roues polaires pour l'alternateur de la figure 1, selon deux exemples de mise en oeuvre de l'invention,
- les figures 4 et 5 représentent, schématiquement et partiellement, respectivement deux coupes transversales de roue polaire conformes à deux exemples de mise en oeuvre de l'invention, et
- les figures 6 à 10 représentent, schématiquement et partiellement, d'autres exemples de roues polaires selon l'invention.

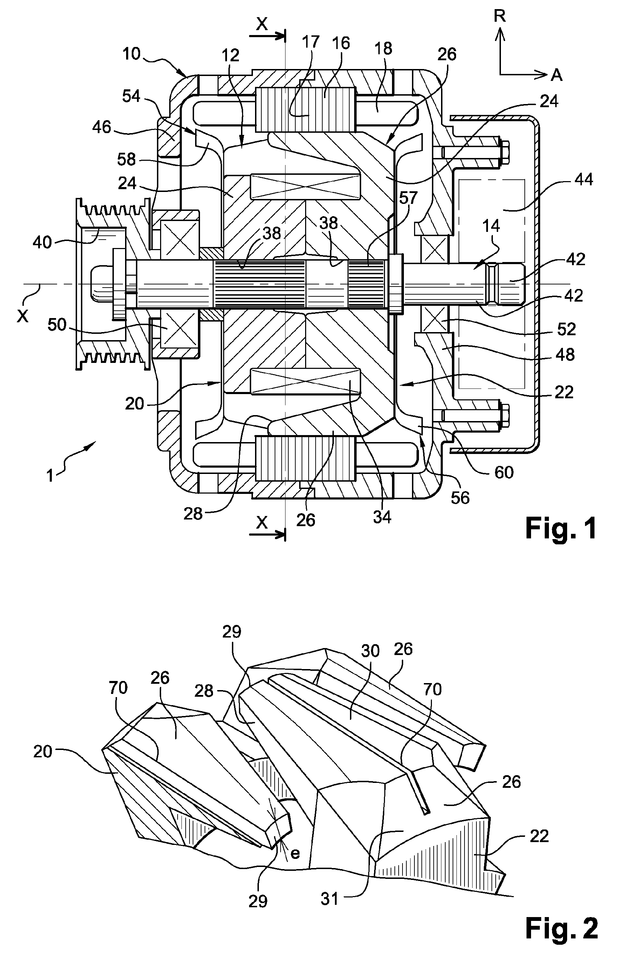

Dans la suite de la description, les flèches "A" et "R" de la figure 1 indiquent respectivement des directions axiale et radiale.

On a représenté sur la figure 1 une machine électrique tournante polyphasée 1 formant, dans le présent exemple de mise en oeuvre de l'invention, un alternateur pour véhicule automobile.

Bien entendu, la machine électrique 1 peut, si on le souhaite, être réversible et former un alterno-démarreur pouvant fonctionner en mode moteur électrique pour démarrer le moteur à combustion du véhicule et en mode alternateur pour produire de l'énergie électrique.

Cette machine 1 comporte un carter 10 et, à l'intérieur de celui-ci, un rotor 12 solidaire en rotation d'un arbre rotatif 14 d'axe X, appelé arbre de rotor, et un stator 16 qui entoure le rotor 12.

Le stator 16 comporte un corps 17 formé d'un paquet de tôles doté d'encoches pour le montage d'un bobinage de stator 18 formant des chignons de part et d'autre du corps de stator 17.

Le rotor 12 comprend deux roues polaires 20 et 22, pourvues chacune d'un flasque transversal 24 sur la périphérie duquel se raccordent une pluralité de griffes 26 s'étendant sensiblement suivant la direction axiale A.

Chacune des griffes 26 présente globalement une forme trapézoïdale lorsqu'elle est observée suivant une direction radiale R, comme on peut le voir sur la figure 2 notamment.

Les griffes 26 d'une roue polaire forment avec les griffes 26 de l'autre roue polaire des espaces interpolaires 28 agencés pour recevoir chacun une structure à aimant, non représentée.

Un bobinage d'excitation 34 est mis en place entre les flasques 24 des roues polaires 20 et 22.

Chaque roue polaire 20 ; 22 comporte un alésage formant un passage intérieur 38 pour recevoir l'arbre 14.

Les roues polaires 20 et 22 sont réalisées par exemple en acier.

L'arbre 14 porte à son extrémité avant une poulie 40 appartenant à un dispositif de transmission de mouvement par l'intermédiaire d'au moins une courroie (non représentée) entre l'alternateur 1 et le moteur à combustion du véhicule automobile, et à son extrémité arrière des bagues collectrices 42 reliées par des liaisons filaires (non représentées) au bobinage d'excitation 34 du rotor 12.

Des balais d'un porte-balais 44 représenté de manière très schématique sont disposés de façon à frotter sur les bagues collectrices, afin d'alimenter le bobinage 34 en courant électrique.

Lorsque l'arbre 14 est en rotation et le bobinage d'excitation 34 activé par une alimentation électrique, le rotor inducteur 12 crée un courant induit alternatif dans le stator 16.

Le carter 10 comporte, dans l'exemple considéré, deux parties, à savoir un palier avant 46 et un palier arrière 48 portant le porte-balais 44.

Les paliers 46 et 48 portent chacun un roulement à billes respectivement 50 et 52 pour le montage à rotation de l'arbre 14.

L'alternateur 1 comporte également des moyens pour son refroidissement.

Par exemple, comme illustré à la figure 1, les paliers 46 et 48 sont ajourés pour permettre le refroidissement de l'alternateur par circulation d'air.

Le rotor 12 porte, dans l'exemple décrit, au moins à l'une de ses extrémités axiales un ventilateur destiné à assurer une circulation de l'air. Un premier élément de ventilation 54 est par exemple prévu sur la face transversale avant du rotor 12 et un deuxième élément de ventilation 56 est prévu sur la face arrière du rotor 12. Chaque élément de ventilation 54 et 56 est pourvu d'une pluralité de pâles 58 et 60.

Dans l'exemple de réalisation décrit, chaque roue polaire 20 ; 22 comporte six griffes 26 de manière à définir un rotor avec 12 espaces interpolaires 28.

En variante, le rotor 12 peut comporter 2, 4, 6, 8 ou 10 espaces interpolaires 28, en fonction du type de machine électrique souhaité.

On va maintenant décrire plus en détail, en référence à la figure 2, les roues polaires 20 et 22.

Sur chacune des griffes 26 des roues 20 et 22, il est prévu un obstacle agencé pour provoquer l'allongement d'un chemin parcouru par des courants de Foucault apparaissant dans la griffe de la roue polaire lors du fonctionnement de l'alternateur, l'obstacle s'étendant sur une profondeur de la griffe 26, mesurée suivant la direction radiale R, supérieure au moins à la moitié de l'épaisseur 'e' de la griffe 26 prise à une extrémité libre 29 de celle-ci.

L'obstacle provoque également l'allongement du flux de réaction d'induit.

La profondeur de l'obstacle peut être constante ou non, le long de la direction longitudinale A.

Dans l'exemple décrit, l'obstacle comporte une rainure 70, unique pour chaque griffe 26, et débouchant sur une face radialement extérieure 30 de la griffe 26.

Chaque rainure 70 présente une profondeur supérieure à la moitié de l'épaisseur 'e' de la griffe 26 correspondante, mesurée dans la direction radiale R à une extrémité libre 29 de cette griffe 26.

Dans l'exemple de la figure 2, la rainure 70 s'étend sur la griffe 26 d'une première extrémité longitudinale 31 de la griffe 26 jusqu'à la deuxième extrémité longitudinale 29 de la griffe, opposée à la première extrémité.

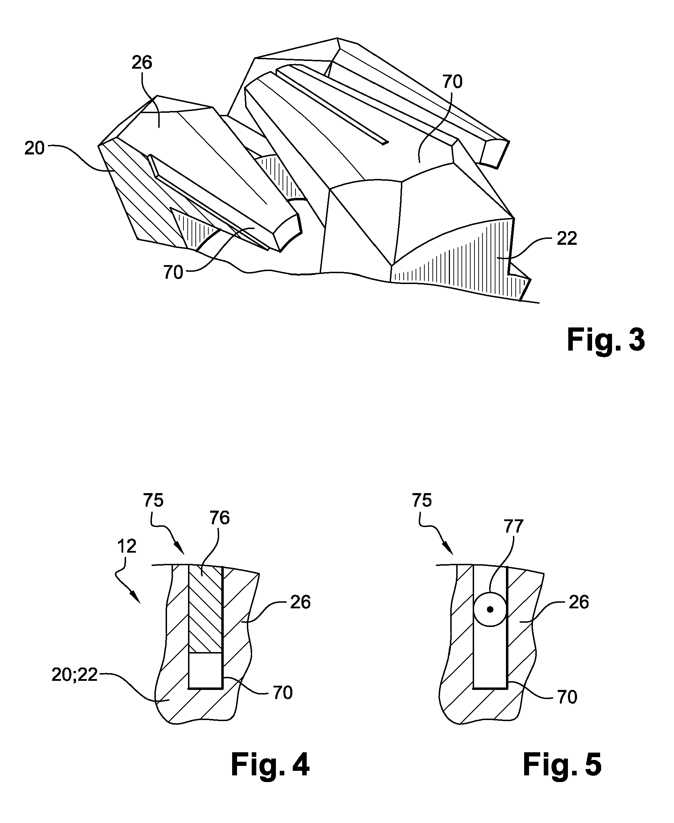

En variante, la rainure 70 peut s'étendre seulement sur une portion de l'étendue longitudinale de la griffe 26 correspondante, comme illustré sur la figure 3.

La rainure 70 est sensiblement rectiligne lorsque la griffe 26 est observée suivant la direction radiale R.

Cette rainure 70 s'étend sensiblement parallèlement à l'axe longitudinal X lorsque la griffe est observée suivant cette direction radiale R.

Un dispositif 75 de compensation de l'effet de la réaction magnétique d'induit lors du fonctionnement de l'alternateur 1, est disposé dans la rainure 70 de la griffe 26.

La rainure 70 peut ainsi servir à la fois pour faire obstacle aux courants de Foucault et recevoir le dispositif de compensation 75 de l'effet de la réaction magnétique d'induit.

Le dispositif de compensation 75 comporte un aimant permanent 76 inséré dans la rainure 70, comme illustré sur la figure 4.

Cet aimant 76 s'étend seulement une portion de profondeur de la rainure 70.

En variante, cet aimant 76 peut s'étendre jusqu'au fond de la rainure 70.

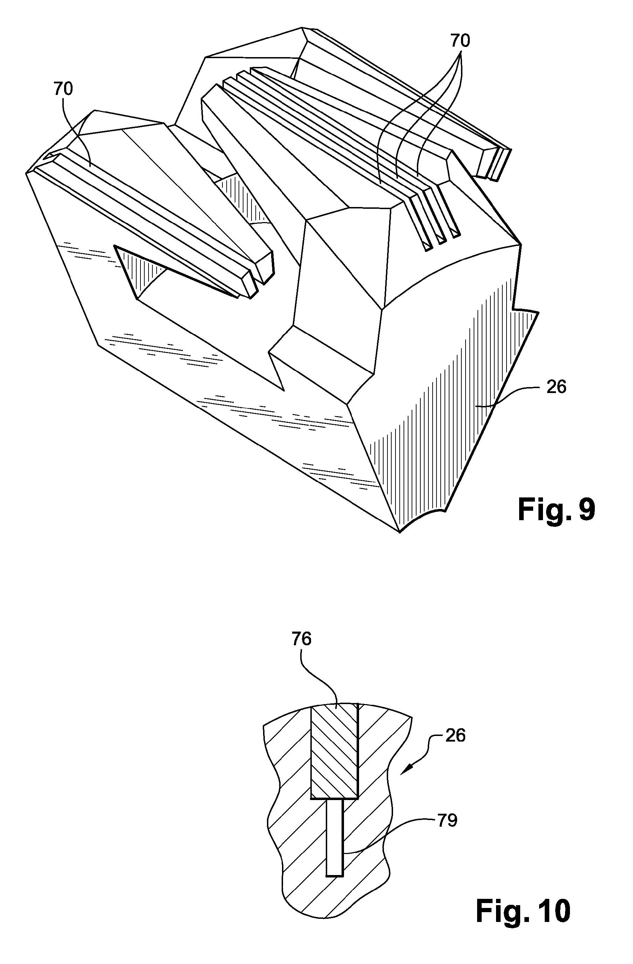

Dans ce cas, la rainure peut se prolonger, si on le souhaite, par une portion plus étroite 79, comme illustré sur la figure 10, afin de limiter le court-circuit de l'aimant.

En variante encore, comme illustré sur la figure 5, le dispositif de compensation 75 comporte un bobinage de compensation 77 formé de fils conducteurs.

Dans les exemples décrits, les rainures 70 sont débouchantes sur la face intérieure des griffes seulement sur une faible portion, au voisinage de l'extrémité libre 29, comme on peut le voir sur la figure 2.

Bien entendu, l'invention n'est pas limitée aux exemples de mise en oeuvre qui viennent d'être décrits.

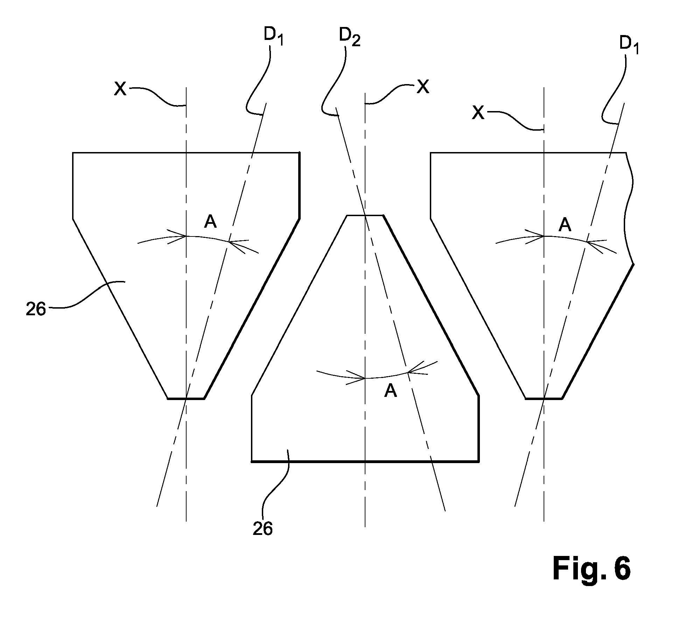

Par exemple, comme illustré sur les figures 6 à 8, les rainures 70 peuvent s'étendre suivant des directions D1 et D2 faisant un angle 'A' non nul avec l'axe longitudinal X lorsque la griffe 26 est observée suivant la direction radiale R.

Ceci permet notamment d'améliorer la compensation de l'effet de la réaction magnétique d'induit.

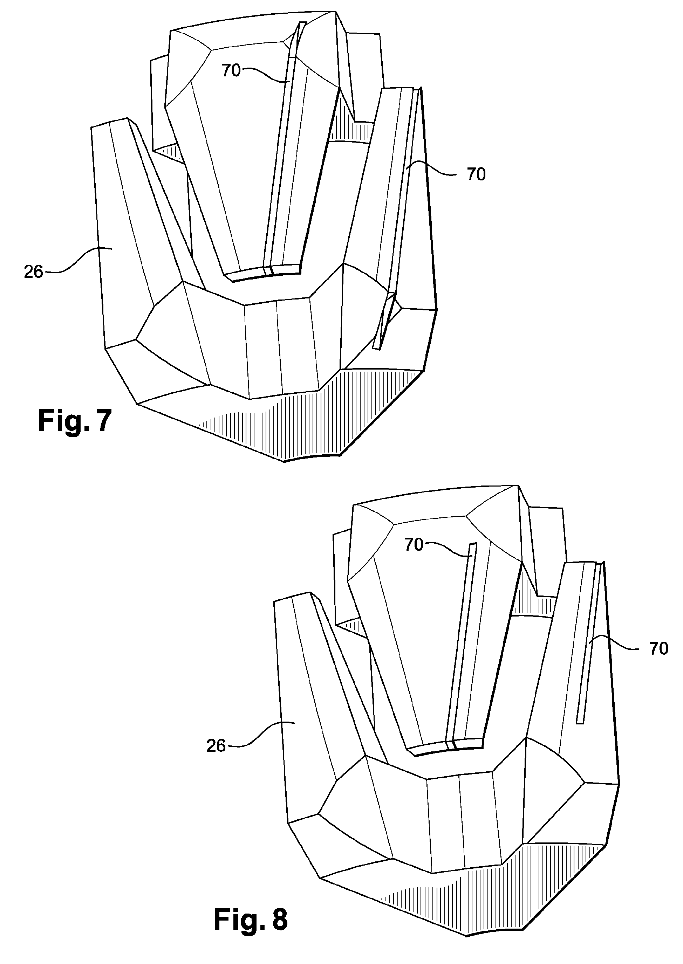

Dans l'exemple de la figure 7, les rainures 70 s'étendent sur toute une longueur des griffes 26.

En variante, comme illustré sur la figure 8, les rainures 70 s'étendent seulement sur une portion de longueur des griffes 26.

La machine électrique tournante peut comporter un rotor simple avec deux roues polaires, ou en variante un rotor double comprenant quatre roues polaires.

Chaque griffe 26 peut, si on le souhaite, comporte trois rainures 70 parallèles, comme illustré sur la figure 9.

Ces rainures peuvent être, éventuellement, de directions quelconques.

## Revendications

1. Rotor (12) de machine électrique tournante synchrone, notamment d'alternateur ou d'alterno-démarreur de véhicule automobile, la machine étant notamment du type polyphasé, le rotor comportant :
- au moins deux roues polaires (20 ; 22),
- au moins un dispositif de compensation (75) de l'effet de la réaction magnétique d'induit lors du fonctionnement de la machine électrique tournante, ce dispositif étant porté au moins partiellement par l'une au moins des roues polaires.

2. Rotor selon la revendication précédente, **caractérisé par le fait que** le dispositif de compensation comporte un bobinage de compensation (77).

3. Rotor selon l'une des revendications précédentes, **caractérisé par le fait que** le dispositif de compensation comporte au moins un aimant permanent (76).

4. Rotor selon l'une quelconque des revendications précédentes, l'une au moins des roues polaires comprenant une griffe (26), **caractérisé par le fait que** le rotor comporte au moins une rainure (70) formée sur ladite griffe de la roue polaire, et **par le fait que** le dispositif de compensation (75) s'étend au moins partiellement dans cette rainure.

5. Machine électrique tournante synchrone, notamment alternateur ou d'alterno-démarreur de véhicule automobile, notamment du type polyphasé, comportant un rotor (12) selon l'une quelconque des revendications précédentes, ce rotor pouvant comportant entre les roues polaires des espaces interpolaires recevant des aimants permanents.

6. Rotor (12) de machine électrique tournante synchrone (1), notamment d'alternateur ou alterno-démarreur de véhicule automobile, la machine étant notamment du type polyphasé, présentant un axe longitudinal (X) et comportant :
- au moins deux roues polaires (20 ; 22) dont l'une au moins comporte une ou plusieurs griffes,
- sur l'une de ces griffes (26), au moins un obstacle (70) agencé pour provoquer l'allongement d'un chemin parcouru par des courants de Foucault apparaissant dans la griffe de la roue polaire lors du fonctionnement de la machine électrique tournante, l'obstacle s'étendant sur une profondeur de la griffe, mesurée suivant une direction radiale (R) perpendiculaire à l'axe longitudinal (X), supérieure au moins à un quart ou à la moitié de l'épaisseur de la griffe (26) prise à une extrémité libre de celle-ci.

7. Rotor selon la revendication précédente, **caractérisé par le fait que** ledit obstacle comporte au moins une rainure (70) réalisée sur la griffe de la roue polaire, la rainure débouchant notamment sur une face radialement extérieure (30) de la griffe et pouvant présenter une profondeur supérieure au moins à la moitié de l'épaisseur de la griffe correspondante, mesurée dans une direction radiale (R) à une extrémité libre de cette griffe, cet obstacle pouvant provoquer l'allongement du flux de réaction d'induit.

8. Rotor selon la revendication précédente, **caractérisé par le fait que** la rainure (70) s'étend sur la griffe sensiblement d'une première extrémité longitudinale de la griffe jusqu'à une deuxième extrémité longitudinale de la griffe, opposée à la première extrémité.

9. Rotor selon l'une des deux revendications précédentes, **caractérisé par le fait que** la rainure (70) est sensiblement rectiligne lorsque cette griffe est observée suivant une direction radiale perpendiculaire à l'axe longitudinale.

10. Rotor selon l'une quelconque des revendications 7 à 9, **caractérisé par le fait que** la rainure (70) s'étend sensiblement parallèlement à l'axe longitudinal lorsque la griffe est observée suivant une direction radiale perpendiculaire à l'axe longitudinale.

11. Rotor selon l'une quelconque des revendications 7 à 9, **caractérisé par le fait que** la rainure (70) s'étend suivant une direction (D1 ; D2) faisant un angle non nul avec l'axe longitudinal lorsque la griffe est observée suivant une direction radiale perpendiculaire à l'axe longitudinale.

12. Rotor selon l'une quelconque des revendications 7 à 11, **caractérisé par le fait qu'**il comporte un dispositif de compensation (75) de l'effet de la réaction magnétique d'induit lors du fonctionnement de la machine électrique tournante, ce dispositif étant disposé au moins partiellement dans la rainure de la griffe.

13. Rotor selon la revendication précédente, **caractérisé par le fait que** le dispositif de compensation comporte l'un au moins d'un bobinage de compensation (77) et d'un aimant permanent (76).

14. Rotor selon l'une quelconque des revendications 7 à 13, **caractérisé par le fait que** la rainure est traversante dans la direction radiale du rotor au moins sur une portion de sa longueur, notamment sur toute sa longueur.

15. Rotor selon l'une quelconque des revendications 7 à 14, **caractérisé par le fait que** l'une au moins des griffes comporte au moins deux rainures, notamment trois rainures, par exemple parallèles.

16. Machine électrique tournante synchrone, notamment alternateur de véhicule automobile, notamment du type polyphasé, comportant un rotor selon l'une quelconque des revendications précédentes.
